# EUROPÄISCHE PATENTANMELDUNG

(11) **EP 3 263 492 A1**
(43) Veröffentlichungstag der Anmeldung: **03.01.2018**
(21) Anmeldenummer: 17183911.1
(22) Anmeldetag: 12.01.2015
(51) Int. Cl.: B65G 1/04, B65G 1/137

(54) **FÖRDERVORRICHTUNG UND VERFAHREN ZUM AUTOMATISIERTEN FÖRDERN VON EINZELWAREN**

(30) Priorität: 24.01.2014 DE 102014201301
(62) Teilanmeldung aus: 15150740.7
(71) Anmelder: Dürkopp Fördertechnik GmbH, 33719 Bielefeld (DE)
(72) Erfinder: Sieksmeier, Dirk, 32139 Spenge (DE); Merten, Markus, 33605 Bielefeld (DE)
(74) Vertreter: Rau, Schneck & Hübner Patentanwälte Rechtsanwälte PartGmbB

(57) **Zusammenfassung**

Eine Fördervorrichtung zum automatisierten Fördern von Einzelwaren entlang einer Förderrichtung, wobei die Fördervorrichtung (1) als Hängefördervorrichtung ausgeführt ist, umfasst mehrere, jeweils ein Adapter-Identifikationsmittel (8) aufweisende Adapter (5) zum Aufnehmen der Einzelwaren (2), wobei jede Einzelware (2) einen Einzelwaren-Transponder (7), eine Transponderlese-Einheit (9) zum Lesen von Einzelwaren-Daten des Einzelwaren-Transponders (7), eine Adapterdaten-Leseeinheit (16) zum Lesen von Adapter-Daten des Adapter-Identifikationsmittels (8), eine mit der Transponderlese-Einheit (9) und mit der Adapterdaten-Leseeinheit (16) in Signalverbindung stehende Steuerungseinheit (13) zum Verknüpfen der mittels der Transponderlese-Einheit (9) gelesenen Einzelwaren-Daten und der mittels der Adapterdaten-Leseeinheit (16) gelesenen Adapter-Daten.

## Beschreibung

Die Erfindung betrifft eine Fördervorrichtung sowie ein Verfahren zum automatisierten Fördern von Einzelwaren.

Ein Verfahren zum Fördern von auf Bügeln hängendem Fördergut ist aus der DE 195 36 313 A1 bekannt. Eine Hängeförderanlage weist eine Identifikationseinrichtung auf zum Identifizieren eines codierten Förderguts. Dadurch ist gewährleistet, dass das codierte Fördergut zu einer vorgesehenen Ausschleusstelle gefördert werden kann.

Es ist die Aufgabe der vorliegenden Erfindung, eine Fördervorrichtung zu schaffen, bei der das automatisierte Fördern von Einzelwaren vereinfacht ist, um insbesondere die Handhabung der Einzelwaren für einen Warenempfänger zu vereinfachen.

Diese Aufgabe wird mit einer Fördervorrichtung mit den im Anspruch 1 angegebenen Merkmalen gelöst. Erfindungsgemäß wurde erkannt, dass zur vereinfachten Identifikation einer Einzelware zwei Identifikationsmittel verwendet werden. Ein Adapter-Identifikationsmittel ist an einem Adapter vorgesehen. Das Adapter-Identifikationsmittel ist ein Ident des Adapters und kann beispielsweise als Adapter-Transponder oder als Barcode ausgeführt sein. Ein Adapter dient zum Aufnehmen der Einzelwaren. Insbesondere ist je ein Adapter pro Einzelware vorgesehen. Jede Einzelware weist darüber hinaus einen Einzelwaren-Transponder als Einzelwaren-Identifikationsmittel auf. Die Fördervorrichtung umfasst ferner eine Transponderlese-Einheit zum Lesenvon Einzelwaren-Daten des Einzelwaren-Transponders. Die Transponderlese-Einheit umfasst insbesondere mehrere, separate Transponderleser. Die Transponderleser sind geeignet, um jeweils separat und unabhängige voneinander, insbesondere mittels einer Transponder-Antenne, den Einzelwaren-Transponder auszulesen. Die einzelnen Transponderleser sind beabstandet zueinander im Raum angeordnet. Dadurch können mehrere Transpondersignale unabhängig voneinander erfasst und ggf. miteinander verglichen werden. Die Zuverlässigkeit des Auslesens des Einzelwaren-Transponders ist dadurch verbessert. Einzelwaren-Daten sind die Einzelware betreffende Daten wie beispielsweise die Art der Ware, insbesondere Kleidungsstück und insbesondere Jacke, Hose, Mantel, Bluse, Anzug, Hemd oder andere. Darüber hinaus können als Einzelwaren-Daten beispielsweise das Herstelldatum, die Größe, die Farbe, der Designer bzw. Hersteller, der Verkaufspreis dienen. Der Einzelwaren-Adapter ist insbesondere in die Ware selbst, die insbesondere als Kleidungsstück ausgeführt ist, integriert. Der Einzelwaren-Adapter ist in das Kleidungsstück eingenäht. Die Fördervorrichtung umfasst ferner eine Adapterdaten-Leseeinheit zum Lesen von Adapter-Daten des Adapter-Identifikationsmittels. Adapter-Daten sind insbesondere ein den jeweiligen Adapter eindeutig identifizierender Identifikationscode als Primärschlüssel. Dieser Code kann beispielsweise als eindeutige Identifikationsnummer ausgeführt sein. Darüber hinaus können als Adapter-Daten beispielsweise Daten über die Art und/oder Größe des Adapters sein. Insbesondere können die Adapter-Daten auch einen potenziellen Empfänger der Einzelwaren umfassen. Die Fördervorrichtung umfasst weiterhin eine mit der Transponderlese-Einheit und mit der Adapterdaten-Leseeinheit in Signalverbindung stehende Steuereinheit zum Verknüpfen der mittels der Transponderlese-Einheit gelesenen Einzelwaren-Daten und der mittels der Adapterdaten-Leseeinheit gelesenen Adapterdaten. Die Verknüpfung dieser Daten wird auch als Verheiraten bezeichnet. Durch das Verheiraten der Daten wird ermöglicht, dass die warenbezogenen Einzelwaren-Daten mit den Adapter-Daten, die im Wesentlichen für die Handhabung des Adapters in der Fördervorrichtung dienen, verknüpft sind. Dadurch können die konkreten Einzelwaren-Daten dem jeweiligen Adapter eindeutig zugeordnet werden. Es ist möglich, die beiden unterschiedlichen Datensätze, also die Adapter-Daten und die Einzelwaren-Daten, zu einem gemeinsamen Datensatz zusammenzufügen. Da die Position des Adapter-Identifikationsmittels an dem Adapter a priori bekannt ist und insbesondere für alle Adapter jeweils identisch ist, kann das Adapter-Identifikationsmittel besonders unkompliziert und mit großer Sicherheit, also mit geringer Ausfallwahrscheinlichkeit, ausgelesen werden. Ein derartiges Auslesen ist beispielsweise bei einem Empfänger der Einzelwaren erforderlich, um eine Wareneingangskontrolle durchzuführen und die Einzelwaren weiter zu handhaben. Insbesondere kann eine eindeutige Identifikation der Einzelware dadurch erfolgen, dass nur das Adapter-Identifikationsmittel gelesen wird und die damit verknüpften, bereits bekannten Einzelwaren-Daten direkt und unkompliziert identifiziert werden. Insbesondere dann, wenn es sich bei den Einzelwaren um Kleidungsstücke handelt, ist die Verknüpfung der Datensätze vorteilhaft, da eine Position des Einzelwaren-Transponders an der Einzelware a priori nicht bekannt ist. Insbesondere kann die Position des Einzelwaren-Transponders an der jeweiligen Einzelware variieren. Die Erfassung der Einzelwaren-Daten über ein Auslesen des Einzelwaren-Transponders bei einem Empfänger der Einzelwaren ist damit vereinfacht. Ein isoliertes Auslesen der Einzelwarendaten ist nicht erforderlich. Ein Kunde, also ein Warenempfänger, der derart gehandhabte Einzelwaren empfängt, kann beispielsweise auf eine separate Diebstahlsicherung verzichten, da die Einzelwaren selbst mit einem Einzelwaren-Transponder versehen sind. Der Warenempfänger kann ferner auf einen separaten Barcodeleser verzichten. Ein Transponderleser, der beim Warenempfänger meist ohnehin bereits vorhanden ist, ermöglicht eine vereinfachte Wareneingangskontrolle. Insbesondere ist es möglich, dass eine Vielzahl von Waren, wie beispielsweise 20 oder mehr Einzelwaren, insbesondere gleichzeitig, und insbesondere im Pulk, erfasst werden können. Dies stellt einen wesentlichen Effizienzvorteil gegenüber der Verwendung eines Barcodes zur Identifizierung an der Einzelware für eine Wareneingangskontrolle dar, denn Barcodes müssen einzeln, nacheinander gelesen werden. Die erfindungsgemäße Fördervorrichtung erleichtert die Handhabung, insbesondere die automatisierte Förderung, von Einzelwaren. Insbesondere ist die Handhabung der Einzelwaren für einen Warenempfänger vereinfacht.

Vorteilhaft ist eine Fördervorrichtung mit einer Zuführ-Fördereinheit zum Zuführen der Einzelwaren. Insbesondere ist es damit möglich, die Fördervorrichtung an ein Warenlager anzubinden, um beispielsweise in einem Warenlager, das als Zwischenlager oder als Hochregallager ausgeführt sein kann, für eine Kommissionierung und eine anschließende Auslieferung an einen Warenempfänger bereitzustellen.

Vorteilhaft ist eine Fördervorrichtung mit einer entlang der Förderrichtung nach einer Zuführ-Fördereinheit angeordneten Vereinzelungseinheit um Vereinzeln der Einzelwaren. Dadurch ist es möglich, dass die Einzelwaren, die über die Zuführ-Fördereinheit bereitgestellt werden, gezielt für die weitere Handhabung in der Fördervorrichtung, insbesondere für ein gezieltes Mitnahmefördern und/oder für ein Lesen der Transponderdaten, bereitgestellt werden.

Vorteilhaft ist eine Fördervorrichtung mit einer Mitnahme-Fördereinheit zum Mitnahmefördern der Einzelwaren. Die Mitnahme-Fördereinheit ermöglicht insbesondere das gezielte Mitnahmefördern der Einzelwaren.

Besonders vorteilhaft ist eine Fördervorrichtung, bei der die Mitnahme-Fördereinheit mehrere Mitnehmer zum Mitnehmen jeweils eines Adapters entlang der Förderrichtung aufweist. Ein Mitnehmer-Abstand zwischen zwei benachbarten Mitnehmern entlang der Förderrichtung ist insbesondere veränderlich einstellbar. Der Mitnehmer-Abstand ist mindestens so groß wie ein kritischer Mindest-Mitnehmer-Abstand. Dadurch ist gewährleistet, dass zwei entlang der Förderrichtung in der Mitnahme-Fördereinheit geförderte Adapter mit daran befestigten Einzelwaren derart weit zueinander beabstandet sind, dass die Daten des Einzelwaren-Transponders mittels der Transponderlese-Einheit zuverlässig ausgelesen werden können. Die Größe des Mindest-Mitnehmer-Abstands ist von der jeweiligen des Transponderlesers der Transponderlese-Einheit abhängig. Der Mindest-Mitnehmer-Abstand ist auch von einer Mitnehmergeschwindigkeit abhängig, mit der die Mitnehmer entlang der Mitnehmer-Fördereinheit verlagert werden. Der Mindest-Mitnehmer-Abstand kann auch zum vereinfachten Lesen der Adapter-Daten dienen. Insbesondere dann, wenn das Adapter-Identifikationsmittel ein Adapter-Transponder ist, dient der Mindest-Mitnehmer-Abstand zum vereinfachten Erfassen der Adapter-Daten. Sofern das Adapter-Identifikationsmittel ein Barcode ist, ist das vereinfachte Auslesen des Barcodes mittels eines Barcodelesers infolge des Mindest-Mitnehmer-Abstands zusätzlich vereinfacht.

Vorteilhaft ist ferner, wenn verschiedene Mitnehmer-Abstände einstellbar sind. Dies kann beispielsweise durch ein Mitnehmer-Abstands-Raster vordefiniert erfolgen. Durch eine gezielte Anordnung des Mitnehmers an einer Rasterposition des Mitnehmer-Abstands-Rasters kann ein Mitnehmer-Abstand schnell, unkompliziert und wenig fehleranfällig festgelegt werden. Es ist auch möglich, dass Mitnehmer-Abstände stufenlos einstellbar sind.

In diesem Fall können beliebige Mitnehmer-Abstände, insbesondere an die zu fördernden Einzelwaren angepasst, eingestellt werden.

Besonders vorteilhaft ist eine Fördervorrichtung, bei der die Mitnahme-Fördereinheit einen Mitnehmerantrieb zum Antreiben der Mitnehmer auf weist. Die Mitnehmer werden mit einer Mitnehmergeschwindigkeit angetrieben. Insbesondere ist die Mitnehmergeschwindigkeit veränderlich einstellbar. Beispielsweise ist der Mitnehmerantrieb als im Bereich der Mitnahme-Fördereinheit umlaufender Kettenantrieb ausgeführt. Ein AntriebsKettenrad kann über einen Elektromotor mit veränderlicher Drehgeschwindigkeit angetrieben werden.

Vorteilhaft ist eine Fördervorrichtung, bei der die Transponderleser der Transponderlese-Einheit im Bereich der Mitnahme-Fördereinheit angeordnet ist. Dadurch, dass im Bereich der Mitnahme-Fördereinheit die vereinzelten Einzelwaren mit einem Mindest-Mitnehmer-Abstand zueinander gefördert werden, ist gewährleistet, dass die Erfassung der Einzelwaren zuverlässig erfolgen kann. Insbesondere ist ausgeschlossen, dass sich benachbarte Einzelwaren und/oder Adapter derart überlagern, dass eine eindeutige Zuordnung von Adpater-Daten und Einzelwaren-Daten nicht eindeutig möglich ist. Das bedeutet, dass die Transponderlese-Einheit im Bereich der Mitnahme-Fördereinheit mit jedem Lesevorgang genau einen Satz Einzelwaren-Daten liest. Diese gelesenen Daten werden an die Steuereinheit übergeben und dort mit genau einem Satz Adapter-Daten, die insbesondere mittels des Adapter-Identifikationsmittels erfasst worden sind, verknüpft.

Vorteilhaft ist eine Fördervorrichtung, bei der der Adapter zum Aufnehmen eines Kleiderbügels geeignet ist. An dem Kleiderbügel kann Einzelware in Form von Bekleidung aufgehängt sein. Die Förderung und Handhabung von Bekleidung auf Kleiderbügeln, also von sogenannter Hängeware, ist vereinfacht.

Vorteilhaft ist eine Fördervorrichtung mit einer Datenübertragungseinheit zum Übertragen der in der Steuerungseinheit verknüpften Daten an eine Datenempfangseinheit. Insbesondere ist die Datenempfangseinheit entfernt von der Fördervorrichtung angeordnet. Die Datenempfangseinheit kann beispielsweise bei einem Empfänger der Einzelware vorgesehen sein. Die Übertragung der Daten von der Datenübertragungseinheit der Fördervorrichtung zu der Datenempfangseinheit kann kabelgebunden oder kabellos erfolgen. Es ist auch denkbar, dass ein mobiler Datenträger, wie beispielsweise eine Speicherkarte, beispielsweise in SD-, CF- oder Mini-SD-Format, dienen. Es ist auch möglich, dass als mobiler Datenträger ein Speicher-Stick in Form eines USB-Sticks dient.

Es ist eine weitere Aufgabe der vorliegenden Erfindung, ein Verfahren zum automatisierten Fördern von Einzelwaren in eine Hängefördervorrichtung zu vereinfachen.

Diese Aufgabe ist durch ein Verfahren mit den im Anspruch 11 genannten Merkmalen gelöst. Die Vorteile des erfindungsgemäßen Verfahrens entsprechen den Vorteilen der Fördervorrichtung, worauf hiermit verwiesen wird.

Ein Ausführungsbeispiel der Erfindung wird nachfolgend anhand der Zeichnung näher erläutert. In dieser zeigen:

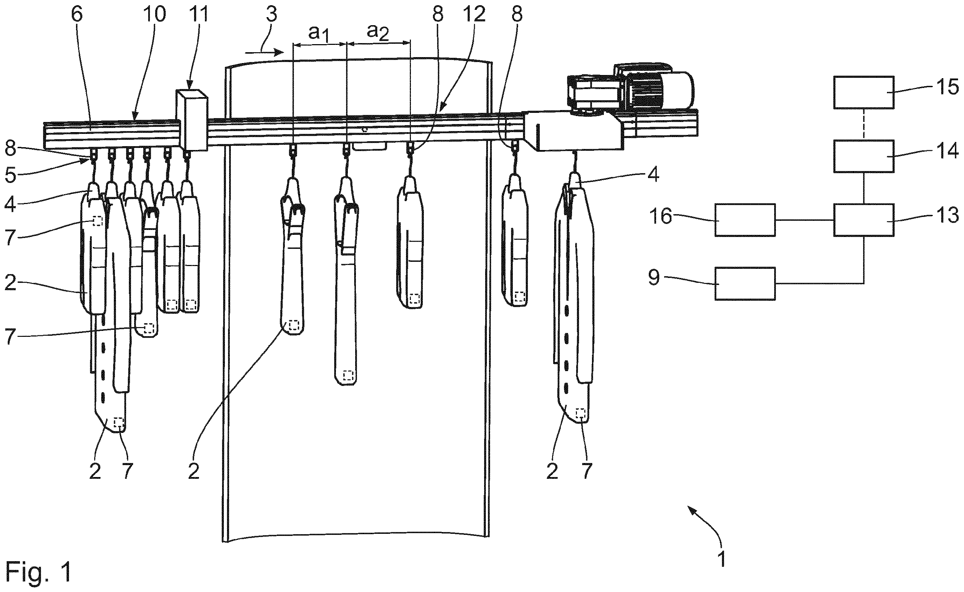

- Fig. 1: eine perspektivische Darstellung einer erfindungsgemäßen Fördervorrichtung.

Eine in Fig. 1 als Ganzes mit 1 bezeichnete Fördervorrichtung dient zum automatisierten Fördern von Einzelwaren 2 entlang einer Förderrichtung 3. Die Fördervorrichtung 1 ist als Hängefördervorrichtung ausgeführt. Das bedeutet, dass die Einzelwaren 2 hängend transportiert, also gefördert, werden. Gemäß dem gezeigten Ausführungsbeispiel handelt es sich bei den Einzelwaren 2 um Kleidungsstücke. Jedes Kleidungsstück 2 ist auf jeweils einem Kleiderbügel 4 aufgehängt. Jeder Kleiderbügel 4 ist an einem dafür vorgesehenen Adapter 5 befestigt. Der Adapter 5 ist in einer Förderschiene 6 entlang der Förderrichtung 3 geführt verlagerbar. Ein derartiger Adapter ist beispielsweise aus der EP 1 690 811 A1 bekannt, worauf hiermit verwiesen wird.

Jede Einzelware 2 weist einen in Fig. 1 rein schematisch und gestrichelt dargestellten Einzelwaren-Transponder 7 auf. Das bedeutet, dass der Einzelwaren-Transponder 7 jeweils in die Einzelware 2 integriert ist. Der Einzelwaren-Transponder 7 weist Einzelwaren-Daten auf.

Jeder Adapter 5 weist als Adapter-Identifikationsmittel einen Adapter-Transponder 8 auf. Der Adapter-Transponder 8 weist Adapter-Daten auf. Die Position des Adapter-Transponders 8 an dem Adapter 5 ist insbesondere festgelegt. Das bedeutet, dass der Adapter-Transponder an einer vergleichsweise kleinen Fläche an dem Adapter 5 angeordnet ist. Die Adapter-Leseeinheit 16 ist speziell auf die definierte Position des Adapter-Transponders 8 bzw. auf die entsprechende Fläche ausgerichtet. Insbesondere ist die Position des Adapter-Transponders 8 an dem Adapter 5 derart festgelegt, dass der Adapter-Transponder 8 mittels einer Adapterdaten-Leseeinheit 16 gelesen werden kann. Die Adapterdaten-Leseeinheit 16 kann in dem Fall, dass das Adapter-Identifikationsmittel der Adapter-Transponder 8 ist, ein Transponderleser sein. Für den Fall, dass das Adapter-Identifikationsmittel ein Barcode ist, ist die Adapterdaten-Leseeinheit ein Barcodeleser. Dadurch, dass der Adapter-Transponder 8 an einer vorher bekannten, für alle Adapter 5 identischen Position angeordnet ist, kann das Lesen der Daten mit erhöhter Zuverlässigkeit erfolgen.

Eine Transponderlese-Einheit 9 ermöglicht das Lesen der Einzelwaren-Daten des Einzelwaren-Transponders 7. Die Transponderlese-Einheit 9 kann mehrere, nicht im Einzelnen in der Fig. 1 dargestellte Transponderleser umfassen. Da a priori die Position eines Einzelwaren-Transponders 7 in der jeweiligen Einzelware 2 nicht bekannt ist, ist die Transponder-Leseeinheit 9 derart ausgeführt, dass eine vergleichsweise große Fläche quer, insbesondere senkrecht, zur Förderrichtung 3 mittels der Transponderlese-Einheit 9 erfasst wird. Insbesondere ist die Größe der Fläche derart festgelegt, dass die Fläche größer ist als eine größte zu transportierende Einzelware 2. Dadurch ist gewährleistet, dass ein in einer beliebigen Einzelware 2 angeordneter Einzelwaren-Transponder 7 zuverlässig mittels der Transponderlese-Einheit 9 erfasst und ausgelesen wird. Die Transponderlese-Einheit 9 kann zum Auslesen sowohl des Einzelwaren-Transponders 7 als auch des Adapter-Transponders 8 dienen.

Die Fördervorrichtung 1 weist entlang der Förderrichtung 3 eine Zuführ-Fördereinheit 10, eine nach der Zuführ-Fördereinheit 10 angeordnete Vereinzelungs-Einheit 11 und eine nach der Vereinzelungseinheit 11 angeordnete Mitnahme-Fördereinheit 12 auf.

Die Zuführ-Fördereinheit 10 ist im einfachsten Fall als eine gegenüber der Horizontalen geneigte Förderschiene 6 ausgeführt, so dass der Adapter 5 mit den daran gehaltenen Kleiderbügeln 4 und Einzelwaren 2 entlang der Förderrichtung 3 in Folge der Schwerkraft gefördert werden. Es ist auch möglich, dass die Zuführ-Fördereinheit 10 ein aktives Förderelement auf weist, das insbesondere angetrieben ist, um eine Förderung der Adapter 5 zu gewährleisten.

Die Vereinzelungseinheit 11 dient dazu, die Adapter 5 mit den daran befestigten Einzelwaren 2 für eine weitere Handhabung, insbesondere für das Lesen der Adapter-Daten und der Einzelwaren-Daten, vorzubereiten. Dazu weist die Vereinzelungseinheit 11 zumindest ein Stopperelement auf, um eine gezielte, insbesondere gezielt getaktete Förderung der Adapter 5 an der Vereinzelungseinheit 11 entlang der Förderrichtung 3 zu ermöglichen. Die Adapter 5 werden durch die Vereinzelungseinheit 11 vereinzelt und gezielt freigegeben und zur Mitnahme-Fördereinheit 12 weitergefördert. Die Mitnahme-Fördereinheit 12 weist mehrere nicht dargestellte Mitnehmer auf. Die Mitnehmer dienen zum Mitnehmen jeweils eines Adapters 5 entlang der Förderrichtung 3. Dadurch ist gewährleistet, dass ein Mitnehmer-Abstand a zwischen zwei benachbarten Mitnehmern entlang der Förderrichtung 3 einstellbar ist. Der Mitnehmer-Abstand ist insbesondere veränderlich einstellbar. Gemäß dem gezeigten Ausführungsbeispiel in Fig. 1 ist ein erster Mitnehmer-Abstand a₁ und ein zweiter Mitnehmer-Abstand a₂ gezeigt.

Die Abstände a₁, a₂ unterscheiden sich. In jedem Fall gilt, dass ein beliebiger Mitnehmer-Abstand a, also insbesondere a₁ und a₂, mindestens so groß ist wie ein kritischer Mindest-Mitnehmer-Abstand aₘᵢₙ. Der Mindest-Mitnehmer-Abstand aₘᵢₙ beträgt gemäß dem gezeigten Ausführungsbeispiel etwa zwischen 250 mm und 700 mm, insbesondere zwischen 300 mm und 600 mm, und insbesondere etwa 500 mm. Sofern der Mindest-Mitnehmer-Abstand aₘᵢₙ zu klein gewählt wird, ist ein zweifelsfreies Auseinanderhalten zwei aufeinanderfolgender Kleidungsstücke entlang der Förderrichtung 3 nicht mehr gewährleistet. Sofern der Mitnehmer-Abstand zu groß gewählt werden sollte, sinkt der Warendurchsatz, also die Anzahl der geförderten Einzelwaren 2 pro Zeiteinheit. Damit sinkt die Produktivität der Fördervorrichtung 1. Durch den Mindest-Mitnehmer-Abstand aₘᵢₙ ist gewährleistet, dass die Einzelwaren-Daten und die Adapter-Daten mittels der Transponderlese-Einheit 9 zuverlässig gelesen werden können. Die Transponderlese-Einheit 9 ist dazu im Bereich der Mitnahme-Fördereinheit 12 angeordnet. Insbesondere ist der Transponderleser senkrecht zu der Förderrichtung 3 im Bereich der Mitnahme-Fördereinheit 12 angeordnet. Die Transponderlese-Einheit 9 kann gegenüber der Horizontalen geneigt angeordnet sein, um das gleichzeitige Erfassen des Einzelwaren-Transponders 7 und des Adapter-Transponders 8 zu vereinfachen. Es ist gemäß dem gezeigten Ausführungsbeispiel aber nicht vorgesehen, dass die Einzelwaren-Transponder 7 und die Adapter-Transponder 8 gleichzeitig erfasst werden. Bezüglich einer vertikalen Anordnung ist die Transponderlese-Einheit 9 insbesondere zwischen einer Höhenposition des Einzelwaren-Transponders 7 und des Adapter-Transponders 8 ausgerichtet.

Gemäß dem gezeigten Ausführungsbeispiel sind die Mitnehmer-Abstände a dadurch veränderlich, vordefiniert einstellbar, dass die Mitnehmer in einem vorgesehenen Mitnehmer-Abstands-Raster eingesetzt werden können. Das Mitnehmer-Abstands-Raster kann beispielsweise durch einen KettenAntrieb, der als Mitnehmerantrieb dient, ausgeführt sein. Kettenglieder können eine Aufnahme für die Mitnehmer darstellen. Der Mitnehmerantrieb dient zum Antreiben der Mitnehmer, wobei insbesondere eine Mitnehmergeschwindigkeit veränderlich einstellbar ist. Die Mitnehmergeschwindigkeit des Mitnehmers beträgt etwa 50 m/min bis 60 m/min, also etwa 1 m/s. Dies entspricht einer Förderrate von rund 5000 bis 6000 Einzelwaren 2 pro Stunde.

Die Transponderlese-Einheit 9 ist mit einer Steuerungseinheit 13 in Signalverbindung. Die Steuerungseinheit 13 ist mit einer Datenübertragungseinheit 14 in Signalverbindung. Es ist möglich, dass die Datenübertragungseinheit 14 in die Steuerungseinheit 13 integriert ist. Die Datenübertragungseinheit 14 ermöglicht eine Datenübertragung an eine, insbesondere entfernt angeordnete, Datenempfangseinheit 15. Die Datenübertragung kann kabelgebunden, kabellos oder mittels eines mobilen Datenspeichers erfolgen. Dies ist in Fig. 1 mittels einer gestrichelten Linie zwischen der Datenübertragungseinheit 14 und der Datenempfangseinheit 15 dargestellt. Die Datenempfangseinheit 15 ist insbesondere bei einem Empfänger der Einzelwaren 2 angeordnet.

Im Folgenden wird ein Verfahren zum automatisierten Fördern der Einzelwaren 2 anhand der Funktionsweise der Fördervorrichtung 1 näher erläutert. Die Einzelwaren 2 werden an Kleiderbügeln 4 in einer dafür vorgesehenen Aufnahme des Adapters 5 befestigt. Die Adapter 5 mit den daran befestigten Einzelwaren 7 werden über die Zuführ-Fördereinheit 10 in der Fördervorrichtung 1 gefördert. An der Vereinzelungseinheit 11 werden die Einzelwaren 2 vereinzelt. Die Adapter 5 werden gezielt an die Mitnahme-Fördereinheit 12 übergeben. Die Mitnahme der Adapter 5 mit den Einzelwaren 2 in der Mitnahme-Fördereinheit 12 erfolgt über feste Mitnehmer. Der durch den Mitnehmer-Abstand a festgelegte Abstand zwischen zwei Adaptern 5 ist für die weitere Handhabung von besonderer Bedeutung. Der ausreichende Abstand zwischen zwei benachbarten Einzelwaren 2 ermöglicht das Lesen der Einzelwaren-Daten vom Einzelwaren-Adapter 7 und der Adapter-Daten vom Adapter-Transponder 8. Die von der Transponderlese-Einheit 9 gelesenen Einzelwaren-Daten und die von der Adapterdaten-Leseeinheit 16 gelesenen Adapter-Daten werden an eine Steuerungseinheit 13 übermittelt. In der Steuerungseinheit 13 werden die Adapter-Daten mit den jeweiligen Einzelwaren-Daten verknüpft. Die so verknüpften Daten werden von der Steuerungseinheit 13 über die Datenübertragungseinheit 14 an die Datenempfangseinheit 15 übertragen. Die Datenempfangseinheit 15 ist insbesondere bei einem Empfänger der Einzelwaren 2 angeordnet. Um die Einzelwaren 2 eindeutig zu identifizieren, ist es ausreichend, wenn der Warenempfänger ausschließlich die Adapter-Daten mittels eines Transponderlesers vom Adapter-Transponder 8 liest. Ein Lesen der Einzelwaren-Daten im Einzelwaren-Transponder 7 ist für den Empfänger der Waren nicht erforderlich, da die Einzelwaren-Daten mit den Adapter-Daten verknüpft sind und in dieser verknüpften Form dem Warenempfänger vorliegen. Der Empfänger der Waren kann die Einzelwaren 2 über die Verknüpfung der Datensätze eindeutig identifizieren. Das Verfahren ist unkompliziert und fehlerunanfällig.

## Patentansprüche

1. Fördervorrichtung zum automatisierten Fördern von Einzelwaren entlang einer Förderrichtung, wobei die Fördervorrichtung (1) als Hängefördervorrichtung ausgeführt ist, die umfasst
a. mehrere, jeweils ein Adapter-Identifikationsmittel (8) aufweisende Adapter (5) zum Aufnehmen der Einzelwaren (2), wobei jede Einzelware (2) einen Einzelwaren-Transponder (7),
b. eine Transponderlese-Einheit (9) zum Lesen von Einzelwaren-Daten des Einzelwaren-Transponders (7),
c. eine Adapterdaten-Leseeinheit (16) zum Lesen von Adapter-Daten des Adapter-Identifikationsmittels (8),
d. eine mit der Transponderlese-Einheit (9) und mit der Adapterdaten-Leseeinheit (16) in Signalverbindung stehende Steuerungseinheit (13) zum Verknüpfen der mittels der Transponderlese-Einheit (9) gelesenen Einzelwaren-Daten und der mittels der Adapterdaten-Leseeinheit (16) gelesenen Adapter-Daten.

2. Fördervorrichtung gemäß Anspruch 1, **gekennzeichnet durch** eine Zuführ-Fördereinheit (10) zum Zuführen der Einzelwaren (2) in der Fördervorrichtung (1).

3. Fördervorrichtung gemäß einem der vorstehenden Ansprüche, **gekennzeichnet durch** eine entlang der Förderrichtung (3) nach einer Zuführ-Fördereinheit (10) angeordnete Vereinzelungseinheit (11) zum Vereinzeln der Einzelwaren (2).

4. Fördervorrichtung gemäß einem der vorstehenden Ansprüche, **gekennzeichnet durch** eine Mitnahme-Fördereinheit (12) zum Mitnahmefördern der Einzelwaren (2).

5. Fördervorrichtung gemäß Anspruch 4, **dadurch gekennzeichnet, dass** die Mitnahme-Fördereinheit (12) mehrere Mitnehmer zum Mitnehmen jeweils eines Adapters (5) entlang der Förderrichtung (3) aufweist, wobei insbesondere ein Mitnehmer-Abstand (a, a₁, a₂) zwischen zwei benachbarten Mitnehmern entlang der Förderrichtung (3) veränderlich einstellbar ist.

6. Fördervorrichtung gemäß Anspruch 5, **dadurch gekennzeichnet, dass** verschiedene Mitnehmer-Abstände (a₁, a₂) durch ein Mitnehmer-Abstands-Raster vordefiniert einstellbar sind oder stufenlos einstellbar sind.

7. Fördervorrichtung gemäß Anspruch 5 oder 6, **dadurch gekennzeichnet, dass** die Mitnahme-Fördereinheit (12) einen Mitnehmerantrieb zum Antreiben der Mitnehmer mit einer Mitnehmergeschwindigkeit aufweist, wobei insbesondere die Mitnehmergeschwindigkeit veränderlich einstellbar ist.

8. Fördervorrichtung gemäß einem der Ansprüche 4 bis 7, **dadurch gekennzeichnet, dass** der Transponderlese-Einheit (9) im Bereich der Mitnahme-Fördereinheit (12) angeordnet ist.

9. Fördervorrichtung gemäß einem der vorstehenden Ansprüche, **dadurch gekennzeichnet, dass** der Adapter (5) zum Aufnehmen eines Kleiderbügels (4) geeignet ist, an dem eine als Bekleidung ausgeführte Einzelware (2) aufgehängt ist.

10. Fördervorrichtung gemäß einem der vorstehenden Ansprüche, **gekennzeichnet durch** eine Datenübertragungseinheit (14) zum Übertragen der in der Steuerungseinheit (13) verknüpften Daten an eine Datenempfangseinheit (15).

11. Verfahren zum automatisierten Fördern von Einzelwaren in einer Hängefördervorrichtung entlang einer Förderrichtung umfassend die Verfahrensschritte
- Aufnehmen jeweils einer Einzelware (2) mittels eines Adapters (5), wobei jeder Adapter (5) ein Adapter-Identifikationsmittel (8) aufweist und jede Einzelware (2) einen Einzelwaren-Transponder (7) aufweist,
- Lesen von Adapter-Daten des Adapter-Identifikationsmittels (8) mittels einer Adapterdaten-Leseeinheit (16),
- Lesen von Einzelwaren-Daten des Einzelwaren-Transponders (7) mittels einer Transponderlese-Einheit (9),
- Verknüpfen der mittels der Transponderlese-Einheit (9) gelesenen Einzelwaren-Daten und der mittels der Adapterdaten-Leseeinheit (16) gelesenen Adapter-Daten mittels einer mit der Transponderlese-Einheit (9) und mit der Adapterdaten-Leseeinheit (16) in Signalverbindung stehenden Steuerungseinheit (13).

12. Verfahren nach Anspruch 11, **gekennzeichnet durch** ein Übertragen der in der Steuerungseinheit (13) verknüpften Daten an eine Datenempfangseinheit (15) mittels einer Datenübertragungseinheit (14).

13. Verfahren nach Anspruch 11 oder 12, **gekennzeichnet durch** ein Mitnahmefördern der Einzelwaren (2) mittels einer Mitnahme-Fördereinheit (12).

14. Verfahren nach Anspruch 13, **gekennzeichnet durch** ein Vereinzeln der Einzelwaren (2) für die Mitnahme-Fördereinheit (12) mittels einer entlang der Förderrichtung (3) vor der Mitnahme-Fördereinheit (12) angeordneten Vereinzelungseinheit (11).

15. Verfahren nach einem der Ansprüche 13 bis 14, **dadurch gekennzeichnet, dass** das Lesen der Adapter-Daten und der Einzelwaren-Daten während des Mitnahmeförderns erfolgt.
